# FASCICULE DE BREVET EUROPEEN

(11) **EP 2 403 726 B1**
(45) Date de publication et mention de la délivrance du brevet: **28.11.2012**
(21) Numéro de dépôt: 10705604.6
(22) Date de dépôt: 26.02.2010
(51) Int. Cl.: B60C 15/04

(54) **PNEUMATIQUE POUR BICYCLETTES**
FAHRRADREIFEN
BICYCLE TYRE

(30) Priorité: 04.03.2009 FR 0951363
(43) Date de publication de la demande: 11.01.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: POTIN, Yves, F-63100 Clermont-Ferrand (FR)
(74) Mandataire: Le Cam, Stéphane Georges Elie
(86) Numéro de dépôt international: PCT/EP2010/052476
(87) Numéro de publication internationale: WO 2010/100088

(56) Documents cités:
- EP-A- 0 350 718
- EP-A- 1 659 002
- WO-A-2008/061544
- GB-A- 2 425 515

## Description

L'invention concerne un pneumatique destiné à équiper un véhicule et plus particulièrement destiné à équiper un véhicule à deux roues tel qu'une bicyclette.

Les pneumatiques pour bicyclette ou vélo sont habituellement constitués d'une couche d'armature de carcasse ancrée dans deux bourrelets par retournement autour de deux tringles. Les bourrelets sont radialement prolongés par des flancs et eux-mêmes prolongés par la bande de roulement.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien contient l'axe de rotation du pneumatique.

Les pneumatiques pour vélo sont destinés à être utilisés soit en monte dite « tube-type », c'est-à-dire associés à une chambre à air soit en monte dite « tubeless », c'est-à-dire montés sur jante sans chambre à air.

Dans un cas comme dans l'autre, la fonction des tringles qui retiennent la carcasse est notamment d'effectuer un serrage sur jante soit pour assurer l'étanchéité à l'air dans le cas des pneumatiques dits tubeless soit dans tous les cas pour maintenir les pneumatiques sur les jantes lors de leur utilisation.

Il existe par ailleurs deux catégories de pneumatique dont l'aspect est fonction de la nature des tringles.

Une première catégorie de pneumatiques est réalisée avec des tringles métalliques, consistant en un enroulement d'un fil métallique, le nombre de tour étant fonction de la taille et de l'usage du pneumatique et notamment de sa pression d'utilisation. Ces pneumatiques se présentent alors sous leur forme finale, c'est-à-dire un pneumatique formant un tore et donc d'un encombrement non négligeable dès lors qu'il est question de transport ou de stockage.

Pour simplifier le stockage et le transport des pneumatiques pour vélo, il a déjà été proposé une deuxième catégorie de pneumatiques qui peuvent être pliés pour en limiter l'encombrement. De tels pneumatiques sont réalisés avec des tringles en matériau textile, par exemple en aramide, pouvant être déformées de manière élastique sans perturber leurs performances lorsqu'elles retrouvent leur forme initiale. De tels pneumatiques s'ils sont effectivement moins encombrant et donc plus faciles à transporter présentent des coûts de fabrication plus élevés que les pneumatiques de la première catégorie.

L'invention a pour but de fournir un pneumatique pour bicyclette combinant les avantages des pneumatiques des deux catégories présentées ci-dessus et donc un encombrant pouvant être réduit pour faciliter le stockage et le transport dudit pneumatique, celui-ci pouvant être réalisé avec un coût de fabrication semblable à celui des pneumatiques de la première catégorie.

Le document GB 2 425 515 décrit encore un pneumatique pour bicyclette comportant une armature de carcasse dont chaque extrémité est ancrée dans deux bourrelets par retournement autour d'une tringle, chacun des bourrelets étant prolongés radialement par des flancs rejoignant une bande de roulement, chacune des tringles étant formé par enroulement d'un câble métallique, formé de filaments, saturé et non fretté.

Ce but est atteint selon l'invention par un pneumatique pour bicyclette comportant une armature de carcasse dont chaque extrémité est ancrée dans deux bourrelets par retournement autour d'une tringle, chacun des bourrelets étant prolongés radialement par des flancs rejoignant une bande de roulement, chacune des tringles étant formé par enroulement d'un câble métallique, formé de filaments, saturé et non fretté, le diamètre dudit câble étant inférieur à 1.5 mm et le diamètre des filaments étant inférieur à 0.25 mm.

Un câble est dit « saturé » dès lors qu'il est impossible d'ajouter un filament supplémentaire entre les filaments formant ledit câble. Il est dit « non fretté » lorsque qu'il ne comporte par un filament supplémentaire enroulé en hélice sur la surface externe dudit câble. Un filament de frette est usuellement choisi avec un diamètre inférieur à celui des filaments du câble et est enroulé selon un pas réduit et dans un sens opposé ou identique à celui de l'enroulement des fils formant la surface externe du câble. La fonction première d'une frette est de limiter le flambage du câble.

Les inventeurs ont su mettre en évidence que l'utilisation d'un câble métallique saturé et non fretté pour réaliser les tringles du pneumatique combinée au diamètre du câble et celui des filaments indiqués autorise une déformation des pneumatiques et un pliage de ceux-ci sans altération des tringles et de leurs propriétés qui rendrait le pneumatique non utilisable.

Les premiers essais réalisés avec les pneumatiques selon l'invention ont en effet mis en évidence qu'il était possible de déformer les pneumatiques d'une façon tout à fait semblable à ce qui se fait actuellement avec les pneumatiques évoqués précédemment et appartement à la deuxième catégorie, c'est-à-dire réalisés avec des tringles en matériau textile.

Les essais ont également montré qu'après stockage des pneumatiques dans leur état plié pendant un temps correspondant au cumul des temps de transport et du temps moyen de stockage avant utilisation sur une bicyclette, les pneumatiques conformes à l'invention retrouvent leur forme initiale et les propriétés des tringles ne sont pas modifiées.

Selon un mode de réalisation préférée de l'invention, le diamètre du câble est inférieur à 1 mm. Un tel diamètre du câble va notamment permettre de réaliser des pneumatiques dont les dimensions du bourrelet sont identiques à celle des pneumatiques usuels, le câble réalisé selon l'invention pouvant présenter un diamètre très proche de celui des fils métalliques habituellement utilisés.

De préférence également, le diamètre des fils ou filaments formant le câble est inférieur à 0.20 mm. De tels diamètres des filaments vont encore contribués à la souplesse du câble et limiter les efforts nécessaires pour plier le pneumatique.

Un mode de réalisation avantageux de l'invention prévoit que le module en traction du câble est supérieur à 150 GPa.

Avantageusement encore, le câble est pliable selon un rayon de courbure compris entre 2 et 5 mm sans présenter de déformation qui rendrait le pneumatique non utilisable. De préférence, il est pliable selon un rayon de courbure inférieur à 3 mm sans présenter de déformation qui rendrait le pneumatique non utilisable.

Selon une variante de réalisation de l'invention, le câble est un câble métallique à couches de construction [L+M] ou [L+M+N] comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20.

Lorsque L est égal à 1, la première couche forme une âme centrale constituée d'un fil métallique de diamètre d₁.

Avantageusement selon cette variante de réalisation, le pas p₂ et le pas p₃ sont identiques.

Avantageusement encore selon cette variante de réalisation, le câble est un câble métallique 19.18 de formule 1+6+12, les couches étant formées avec le même sens de rotation et avec des pas identiques égaux à 10 mm. Un tel câble autorise la formation d'une tringle par un enroulement de 3 à 5 tours. Le nombre de tours nécessaires est fonction de la dimension du pneumatique et de son usage.

Selon une autre variante de réalisation, le câble est un câble métallique 12.15 de formule 3+9, les couches étant formées avec le même sens de rotation et avec des pas identiques égaux à 10 mm. Un tel câble nécessite un enroulement de 6 à 10 tours pour former les tringles d'un pneumatique de bicyclette selon la dimension de celui-ci.

Un mode de réalisation préféré de l'invention prévoit que le câble métallique est réalisé en acier présentant une teneur en carbone inférieure à 0.5 %.

Le choix d'un tel acier permet encore de limiter le coût de revient du câble et donc du pneumatique. En effet, de telles teneurs en carbone permettent de simplifier le procédé de tréfilage de l'acier et notamment d'éviter ou tout au moins de limiter les phases de montée en température.

D'autres détails et caractéristiques avantageux de l'invention ressortiront ci-après de la description des exemples de réalisation de l'invention en référence aux figures 1 à 3 qui représentent :
- figure 1, une vue méridienne d'un schéma d'un pneumatique selon l'invention,
- figure 2, une représentation schématique d'une vue en coupe du câble formant la tringle du pneumatique de la figure 1,
- figure 3, une représentation schématique d'une vue en coupe d'un autre câble utilisable pour former une tringle d'un pneumatique selon l'invention.

Les figures ne sont pas représentées à l'échelle pour en simplifier la compréhension.

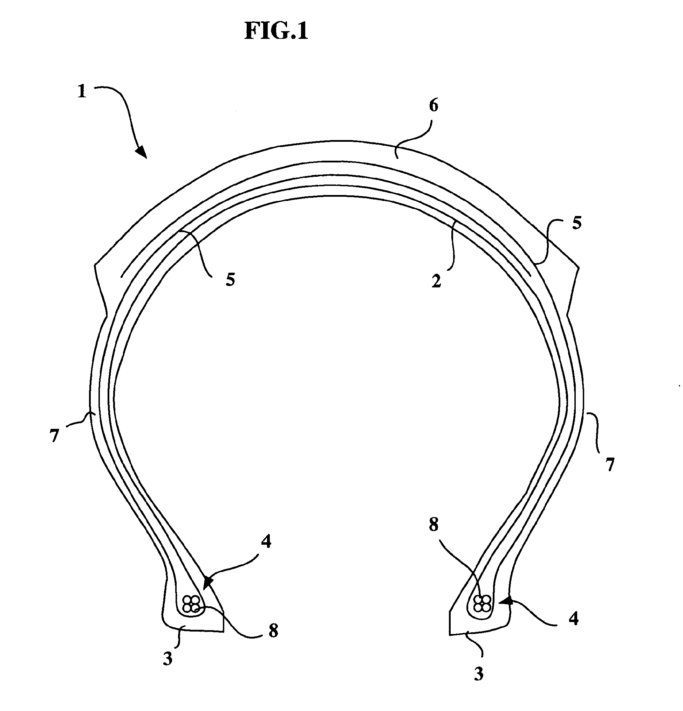

La figure 1 représente un pneumatique 1 de type 37-622 destiné à être monté sur une jante de diamètre 622 mm pour équiper une bicyclette du segment « city », c'est-à-dire une bicyclette à usage urbain.

Le pneumatique 1 est constitué d'une couche d'armature de carcasse 2 ancrée dans chacun des bourrelets 3 du pneumatique 1 par retournement autour des tringles 4. Les retournements 5 de la couche d'armature de carcasse 2 se prolongent jusqu'au sommet du pneumatique pour venir se chevaucher. Au sommet du pneumatique, on peut donc observer trois épaisseurs de la couche d'armature de carcasse 2.

Les pneumatiques pour bicyclette peuvent comporter à leur sommet d'autres couches d'éléments de renforcement telles que des couches de protection qui viennent s'intercaler entre la couche d'armature de carcasse et ses retournements. Ces couches de protection peuvent encore s'étendre dans les flancs du pneumatiques jusqu'au niveau des tringles.

L'armature est ensuite radialement surmontée d'une bande de roulement 6 formée d'une couche de mélange caoutchouteux qui se prolonge pour former les flancs 7 du pneumatique 1.

Selon d'autres modes de réalisation, les matériaux caoutchouteux constitutifs de la bande de roulement et des flancs peuvent être différents.

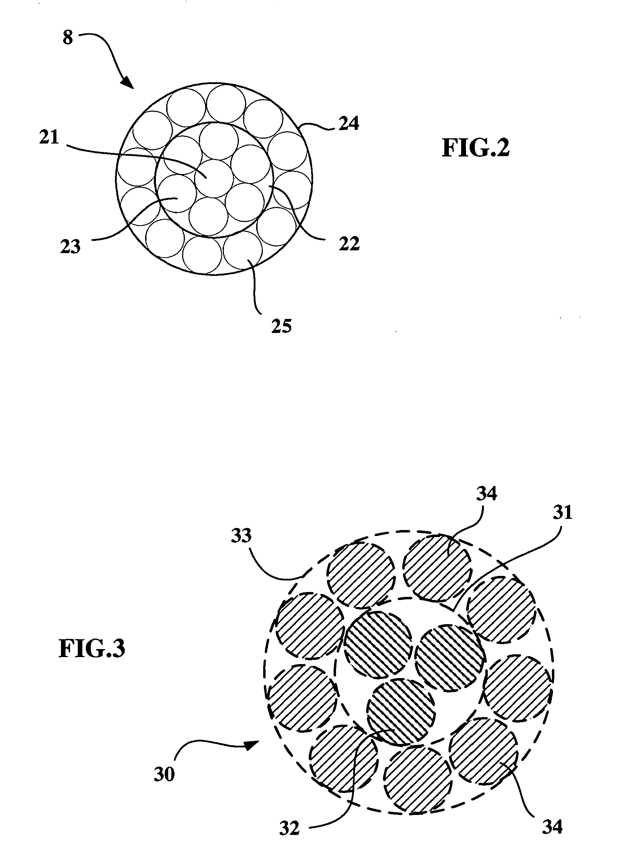

Conformément à l'invention, les tringles sont formées par enroulement d'un câble métallique 8 de type 19.18 sur lequel il sera revenu en référence à la figure 2. Dans le cas de la dimension présentée sur la figure 1 et pour l'application de type « city », le câble choisi a nécessité un enroulement de quatre tours pour réaliser chacune des tringles.

La figure 2 illustre une représentation schématique d'une vue en coupe du câble métallique 8 de type 19.18 formant les tringles 4 du pneumatique 1. Il s'agit d'un câble de formule 1+6+12 constitué de 19 filaments de 18/100 mm. Le câble 8 est ainsi constitué d'une âme centrale formée d'un filament 21 entourée d'une première couche 22 formée de 6 filaments 23, elle-même entourée d'une couche externe 24 formée de 12 filaments 25. Les filaments 23 et 25 sont enroulés dans le même sens avec des pas identiques égaux à 10 mm. Ce câble 8 est un câble saturé non fretté réalisé en acier avec une teneur en carbone égale à 0.4%.

Le câble ainsi défini présente un module en traction égal à 190 GPa.

Un tel câble autorise des pliages avec un rayon de 3 mm sans présenter de déformation permanente qui rendrait le pneumatique non utilisable.

La figure 3 illustre une représentation schématique d'une vue en coupe d'un câble métallique 30 de type 12.15 pouvant former les tringles d'un pneumatique selon l'invention. Il s'agit d'un câble de formule 3+9 constitué de 12 filaments de 15/100 mm. Le câble 30 est ainsi constitué d'une première couche 31 formée de 3 filaments 32 entourée d'une deuxième couche 33 formée de 9 filaments 34. Les filaments 32 et 34 sont enroulés dans le même sens avec des pas identiques égaux à 10 mm. Ce câble 30 est un câble saturé non fretté réalisé en acier avec une teneur en carbone égale à 0.4%.

Le câble ainsi défini présente un module en traction égal à 190 GPa.

Un tel câble autorise des pliages avec un rayon de 2 mm sans présenter de déformation permanente qui rendrait le pneumatique non utilisable.

L'invention ne doit pas être interprétée comme étant limitée à aux exemples illustrés. Les tringles peuvent par exemple être réalisé avec d'autres câbles dès lors que ceux-ci satisfont les critères définis ou bien par exemple avec des câbles dont les formules sont identiques à ceux cités avec des pas pouvant être différents et/ou les filaments étant enroulés en sens opposés.

Par ailleurs, l'invention s'applique à tous types de bicyclettes ou vélos, tels que des vélos de type route, VTT (vélo tout terrain), VTC (vélo tout chemin), vélos avec moteurs par exemple électriques ...

L'invention s'applique encore à des pneumatiques de type tubeless, c'est-à-dire monté directement sur une jante sans chambre à air ou bien à des pneumatiques de type « tube-type » nécessitant la présence d'une chambre à air.

## Revendications

1. Pneumatique (1) pour bicyclette comportant une armature de carcasse (2) dont chaque extrémité est ancrée dans deux bourrelets (3) par retournement autour d'une tringle (4), chacun des bourrelets (3) étant prolongés radialement par des flancs (7) rejoignant une bande de roulement (6), chacune des tringles (4) étant formé par enroulement d'un câble métallique (8, 30), formé de filaments (21, 23, 25, 32, 34), saturé et non fretté, **caractérisé en ce que** le diamètre dudit câble (8, 30) est inférieur à 1.5 mm et **en ce que** le diamètre des filaments (21, 23, 25) est inférieur à 0.25 mm.

2. Pneumatique (1) selon la revendication 1, **caractérisé en ce que** le diamètre du câble (8, 30) est inférieur à 1 mm.

3. Pneumatique (1) selon l'une des revendications 1 ou 2, **caractérisé en ce que** le diamètre des filaments (21, 23, 25, 32, 34) du câble (8, 30) est inférieur à 0.20 mm.

4. Pneumatique (1) selon l'une des revendications 1 à 3, **caractérisé en ce que** le module en traction du câble (8, 30) est supérieur à 150 GPa.

5. Pneumatique (1) selon la revendication 1 à 4, **caractérisé en ce que** le câble (8) est pliable selon un rayon de courbure compris entre 2 et 5 mm sans présenter de déformation.

6. Pneumatique (1) selon l'une des revendications 1 à 5, **caractérisé en ce que** le câble (8, 30) est un câble métallique à couches de construction [L+M] ou [L+M+N] comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20.

7. Pneumatique (1) selon la revendication 6, **caractérisé en ce que** le pas p₂ et le pas p₃ sont identiques.

8. Pneumatique (1) selon l'une des revendications 1 à 7, **caractérisé en ce que** le câble (8) est un câble métallique 19.18 de formule 1+6+12, les couches (22, 24) étant formées avec le même sens de rotation et avec des pas identiques égaux à 10 mm.

9. Pneumatique (1) selon l'une des revendications 1 à 7, **caractérisé en ce que** le câble (30) est un câble métallique 12.15 de formule 3+9, les couches (31, 33) étant formées avec le même sens de rotation et avec des pas identiques égaux à 10 mm.

10. Pneumatique (1) selon l'une des revendications précédentes, **caractérisé en ce que** le câble métallique (8, 30) est réalisé en acier et **en ce que** l'acier présente une teneur en carbone inférieure à 0.5 %.

## Claims

1. Bicycle tyre (1) comprising a carcass reinforcement (2), each edge of which is anchored in two beads (3) by a turn-up around a bead core (4), each bead (3) being continued radially by sidewalls (7) which lead into a tread (6), each of the bead cores (4) being formed by winding a saturated non-wrapped metal cable (8,30) made of filaments (21, 23, 25, 32, 34), **characterized in that** the diameter of said cable (8, 30) is less than 1.5 mm and **in that** the diameter of the filaments (21, 23, 25) is less than 0.25 mm.

2. Tyre (1) according to Claim 1, **characterized in that** the diameter of the cable (8, 30) is less than 1 mm.

3. Tyre (1) according to one of Claims 1 and 2, **characterized in that** the diameter of the filaments (21, 23, 25, 32, 34) of the cable (8, 30) is less than 0.20 mm.

4. Tyre (1) according to one of Claims 1 to 3, **characterized in that** the modulus in tension of the cable (8, 30) is greater than 150 GPa.

5. Tyre (1) according to one of Claims 1 to 4, **characterized in that** the cable (8) is foldable to a radius of curvature of between 2 and 5 mm without exhibiting deformation.

6. Tyre (1) according to one of Claims 1 to 5, **characterized in that** the cable (8, 30) is a metal cable with construction layers [L+M] or [L+M+N] comprising a first layer C 1 with L wires of diameter d₁ with L ranging from 1 to 4, surrounded by at least one intermediate layer C2 with M wires of diameter d₂ wound together helically at a pitch p₂ with M ranging from 3 to 12, said layer C2 being optionally surrounded by an outer layer C3 of N wires of diameter d₃ wound together helically at a pitch p₃ with N ranging from 8 to 20.

7. Tyre (1) according to Claim 6, **characterized in that** the pitch p₂ and the pitch p₃ are identical.

8. Tyre (1) according to one of Claims 1 to 7, **characterized in that** the cable (8) is a 19.18 metal cable of 1+6+12 construction, the layers (22, 24) being formed with the same direction of rotation and with identical pitches equal to 10 mm.

9. Tyre (1) according to one of Claims 1 to 7, **characterized in that** the cable (30) is a 12.15 metal cable of 3+9 construction, the layers (31, 33) being formed with the same direction of rotation and with identical pitches equal to 10 mm.

10. Tyre (1) according to one of the preceding claims, **characterized in that** the metal cable (8, 30) is made of steel and **in that** the steel has a carbon content of less than 0.5 %.

## Patentansprüche

1. Fahrradreifen (1), der eine Karkassenbewehrung (2) aufweist, von der jedes Ende durch Umschlag um einen Wulstkern (4) in zwei Wülsten (3) verankert ist, wobei jeder der Wülste (3) radial von Flanken (7) verlängert wird, die sich mit einem Laufstreifen (6) vereinigen, wobei jeder der Wulstkerne (4) durch Aufwickeln eines Metallkabels (8, 30) geformt wird, das aus Filamenten (21, 23, 25, 32, 34) besteht, gesättigt und nicht umschnürt ist, **dadurch gekennzeichnet, dass** der Durchmesser des Kabels (8, 30) geringer als 1,5 mm ist und dass der Durchmesser der Filamente (21, 23, 25) geringer als 0,25 mm ist.

2. Reifen (1) nach Anspruch 1, **dadurch gekennzeichnet, dass** der Durchmesser des Kabels (8, 30) geringer als 1 mm ist.

3. Reifen (1) nach einem der Ansprüche 1 oder 2, **dadurch gekennzeichnet, dass** der Durchmesser der Filamente (21, 23, 25, 32, 34) des Kabels (8, 30) geringer als 0,20 mm ist.

4. Reifen (1) nach einem der Ansprüche 1 bis 3, **dadurch gekennzeichnet, dass** der Zugmodul des Kabels (8, 30) höher als 150 GPa ist.

5. Reifen (1) nach Anspruch 1 bis 4, **dadurch gekennzeichnet, dass** das Kabel (8) gemäß einem Krümmungsradius zwischen 2 und 5 mm umgebogen werden kann, ohne eine Verformung aufzuweisen.

6. Reifen (1) nach einem der Ansprüche 1 bis 5, **dadurch gekennzeichnet, dass** das Kabel (8, 30) ein Metallkabel mit Aufbauschichten [L+M] oder [L+M+N] ist, das eine erste Schicht C1 mit L Drähten eines Durchmessers d₁, wobei L von 1 bis 4 geht, umgeben von mindestens einer Zwischenschicht C2 mit M Drähten eines Durchmessers d₂ aufweist, die gemäß einer Steigung p₂ spiralförmig aufgewickelt sind, mit M von 3 bis 12, wobei die Schicht C2 ggf. von einer Außenschicht C3 von N Drähten eines Durchmessers d₃ umgeben ist, die gemäß einer Steigung p₃ spiralförmig aufgewickelt sind, mit N von 8 bis 20.

7. Reifen (1) nach Anspruch 6, **dadurch gekennzeichnet, dass** der die Steigung p₂ und die Steigung p₃ gleich sind.

8. Reifen (1) nach einem der Ansprüche 1 bis 7, **dadurch gekennzeichnet, dass** das Kabel (8) ein Metallkabel 19.18 der Formel 1+6+12 ist, wobei die Schichten (22, 24) mit der gleichen Drehrichtung und gleichen Steigungen gleich 10 mm geformt sind.

9. Reifen (1) nach einem der Ansprüche 1 bis 7, **dadurch gekennzeichnet, dass** das Kabel (30) ein Metallkabel 12.15 der Formel 3+9 ist, wobei die Schichten (31, 33) mit der gleichen Drehrichtung und gleichen Steigungen gleich 10 mm geformt sind.

10. Reifen (1) nach einem der vorhergehenden Ansprüche, **dadurch gekennzeichnet, dass** das Metallkabel (8, 30) aus Stahl hergestellt ist, und dass der Stahl einen Kohlenstoffgehalt von weniger als 0.5 % aufweist.
